# EUROPÄISCHE PATENTSCHRIFT

(11) **EP 3 577 094 B1**
(45) Veröffentlichungstag und Bekanntmachung des Hinweises auf die Patenterteilung: **19.05.2021**
(21) Anmeldenummer: 18702478.1
(22) Anmeldetag: 30.01.2018
(51) Int. Cl.: C05G 3/90

(54) **3,4-DIMETHYLPYRAZOL ENTHALTENDE MISCHUNG UND IHRE VERWENDUNG**
MIXTURE CONTAINING 3,4-DIMETHYLPYRAZOLE AND USE THEREOF
MÉLANGE CONTENANT DU 3,4-DIMÉTHYLPYRAZOLE ET SON UTILISATION

(30) Priorität: 01.02.2017 DE 102017201608
(43) Veröffentlichungstag der Anmeldung: 11.12.2019
(73) Patentinhaber: EuroChem Agro GmbH, 68165 Mannheim (DE)
(72) Erfinder: PETERS, Nils, 67227 Frankenthal (DE)
(74) Vertreter: Féaux de Lacroix, Stefan
(86) Internationale Anmeldenummer: PCT/EP2018/052200
(87) Internationale Veröffentlichungsnummer: WO 2018/141708

(56) Entgegenhaltungen:
- EP-A1- 3 029 011
- WO-A1-2017/218618
- DE-C1- 10 164 103
- BARTH G ET AL: "Effectiveness of 3,4-Dimethylpyrazole Phosphate as Nitriflcation Inhibitor in Soil as Influenced by Inhibitor Concentration, Application Form, and Soil Matric Potential", PEDOSPHERE, ELSEVIER, AMSTERDAM, NL, Bd. 18, Nr. 3, 1. Juni 2008 (2008-06-01), Seiten 378-385, XP022934542, ISSN: 1002-0160, DOI: 10.1016/S1002-0160(08)60028-4 [gefunden am 2008-06-01]
- HONG JIE DI ET AL: "Inhibition of ammonium oxidation by a liquid formulation of 3,4-Dimethylpyrazole phosphate (DMPP) compared with a dicyandiamide (DCD) solution in six new Zealand grazed grassland soils", JOURNAL OF SOILS AND SEDIMENTS, SPRINGER-VERLAG, BERLIN/HEIDELBERG, Bd. 11, Nr. 6, 11. Mai 2011 (2011-05-11), Seiten 1032-1039, XP019941420, ISSN: 1614-7480, DOI: 10.1007/S11368-011-0372-1
- ZERULLA W ET AL: "3,4-dimethylpyrazole phosphate (DMPP)- a new nitrification inhibitor for agriculture and horticulture", BIOLOGY AND FERTILITY OF SOILS, BERLIN, DE, Bd. 34, 1. Januar 2001 (2001-01-01), Seiten 79-84, XP002437575, ISSN: 0178-2762, DOI: 10.1007/S003740100380

## Beschreibung

Die Erfindung betrifft eine 3,4-Dimethylpyrazol enthaltende Mischung, ihre Herstellung und ihre Verwendung.

Um Pflanzen in der Landwirtschaft den von ihnen benötigten Stickstoff zur Verfügung zu stellen, werden im Wesentlichen Ammoniumverbindungen als Düngemittel eingesetzt.

Ammoniumverbindungen werden im Boden in relativ kurzer Zeit mikrobiell zu Nitrat umgesetzt (Nitrifikation). Nitrat kann jedoch im Unterschied zu Ammonium aus dem Boden wesentlich leichter ausgewaschen werden. Der als Nitrat ausgewaschene Stickstoffanteil steht dabei für die Pflanzenernährung nicht mehr zur Verfügung, sodass aus diesem Grund eine schnelle Nitrifikation unerwünscht ist. Zur besseren Ausnutzung des Düngers werden deshalb dem Dünger Nitrifikationsinhibitoren zugesetzt. Eine bekannte Gruppe von Nitrifikationsinhibitoren sind Pyrazolverbindungen.

Ein Problem bei der Verwendung von Pyrazolverbindungen als Nitrifikationsinhibitoren ist deren hohe Flüchtigkeit. Bei der Lagerung von Pyrazolverbindungen enthaltenden Düngerzubereitungen tritt somit ein kontinuierlicher Verlust an Wirkstoff durch Verdampfung auf. Deshalb müssen die Pyrazolverbindungen durch geeignete Maßnahmen in eine nicht flüchtige Form formuliert werden.

Die EP-B-1 120 388 beschreibt die Verwendung eines Phosphorsäure-Additionssalzes von 3,4-Dimethylpyrazol als Nitrifikationsinhibitor. Durch die Überführung in das Phosphorsäure-Additionssalz wird die Flüchtigkeit der Pyrazolverbindung deutlich herabgesetzt.

Wie in Tabelle I der EP-B-0 917 526 gezeigt, weist 3,4-Dimethylpyrazolphosphat einen deutlich geringeren Verlust auf im Vergleich zu 3,4-Dimethylpyrazol. Die EP-B-0 917 526 lehrt darüber hinaus die Verwendung von anorganischen oder organischen Polysäuren zur Behandlung von Mineraldüngemitteln in Pulverform oder in Granulatform, die einen Nitrifikationsinhibitor enthalten. Hierdurch soll die Flüchtigkeit von Pyrazolverbindungen nochmals vermindert werden. Zur Herstellung wird das Mineraldüngemittel mit dem Nitrifikationsinhibitor vermischt, oder eine Lösung des Nitrifikationsinhibitors, gegebenenfalls gemeinsam mit Polysäure, wird auf das Mineraldüngemittel aufgesprüht und gegebenenfalls anschließend getrocknet.

Die DE-C-101 64 103 betrifft Verfahren zur Herstellung von festen Mineraldüngemitteln, wobei Lösungen oder Suspensionen spezieller Pyrazolverbindungen auf das Mineraldüngemittel aufgebracht werden. Die Lösungen oder Suspensionen enthalten maximal 20 Gew.-% des Nitrifikationsinhibitors oder des Säureadditionssalzes davon, bezogen auf die gesamte Lösung oder Suspension. Das Mineraldüngemittel wird vor dem Aufbringen der Lösung oder Suspension auf eine Temperatur im Bereich von 70 bis 130 °C aufgeheizt. Durch das Aufheizen wird sichergestellt, dass nicht zu viel Wasser auf dem Mineraldüngemittel vorliegt. Es wird angegeben, dass eine homogenere Verteilung des Inhibitors auf der Düngemitteloberfläche erzielt wird, indem anstelle konzentrierter Inhibitoren-Lösungen verdünnte Lösungen eingesetzt werden.

Im Versuch A wurde kaltes Ammoniumsulfatsalpeter(ASS)-Düngemittel mit 0,019 % 3,4-DMPP in Form einer grün gefärbten, phosphorsäurehaltigen 3,4-DMPP-Lösung mit einem 3,4-DMPP-Gehalt von etwa 34 % ausgerüstet. Es ergab sich im Vergleich zur erfindungsgemäßen verdünnteren Lösung eine schlechtere Verteilung auf dem Mineraldüngemittel.

Die genaue Zusammensetzung der Lösung ist nicht angegeben, insbesondere sind weder Wasser- noch Phosphorsäuregehalte angegeben. Zudem ist nicht angegeben, welches Lösungsmittel verwendet wurde.

Häufig wird in der Praxis 3,4-Dimethylpyrazol erst unmittelbar vor dem Aufbringen auf ein Mineraldüngemittel in wässriger Lösung mit Phosphorsäure vermischt, wobei sich das Phosphorsäure-Additionssalz des 3,4-Dimethylpyrazols bildet.

Hierbei müssen zum einen zwei unterschiedliche chemische Komponenten im richtigen Verhältnis dosiert und vermischt werden. Zum anderen ist die Salzbildung eine exotherme, chemische Reaktion, so dass entsprechende Sicherheitsvorkehrungen getroffen werden müssen. Die Umsetzung vor Ort begegnet auch zulassungsrechtlichen Problemen.

Aufgabe der vorliegenden Erfindung ist die Bereitstellung einer Mischung zum Aufbringen auf Düngemittel, die 3,4-Dimethylpyrazol in weniger flüchtiger Form enthält und unter Umgebungsbedingungen in einfacher Weise zur Aufbringung auf das Düngemittel verarbeitet und unter Umgebungsbedingungen aufgebracht werden kann.

Die Aufgabe wird erfindungsgemäß gelöst durch eine Mischung, enthaltend 22,0 bis 32,0 Gew.-% Wasser und 15 bis 19 Gew.-%, bezogen auf die gesamte Mischung, die 100 Gew.-% ergibt, 3,4-Dimethylpyrazol, und Phosphorsäure in einem Molverhältnis zu 3,4-Dimethylpyrazol von mindestens 2 : 1.

Die Aufgabe wird zudem gelöst durch die Verwendung einer derartigen Mischung zum Behandeln oder Beschichten von ammoniumstickstoffhaltigen Düngemitteln.

Die Aufgabe wird ferner gelöst durch ein Verfahren zur Herstellung von stabilisierten ammoniumstickstoffhaltigen Düngemittelpulvern, -granulaten, -split, -tabletten oder -strängen, bei dem man die vorstehende Mischung auf ammoniumstickstoffhaltige Düngemittelpulver, -granulate, -split, -tabletten oder -stränge aufbringt und auf der Düngemitteloberfläche gleichmäßig verteilt.

Es wurde erfindungsgemäß gefunden, dass das Aufbringen von 3,4-Dimethylpyrazol als Nitrifikationsinhibitor auf ammoniumstickstoffhaltige Düngemittel in einer Weise, bei der die Flüchtigkeit des 3,4-Dimethylpyrazols herabgesetzt ist, vorteilhaft gelingt, wenn das 3,4-Dimethylpyrazol gemeinsam mit Phosphorsäure eingesetzt wird, so dass sich das Phosphorsäure-Additionssalz von 3,4-Dimethylpyrazol ausbildet, wobei der Anteil dieses Additionssalzes, die Wassermenge und die Phosphorsäuremenge in Wasser so eingestellt werden, dass sich zum einen eine lagerstabile aufsprühfähige Mischung ergibt. Zum anderen ist das auf das Düngemittel aufzusprühende Mischungsvolumen so bemessen, dass eine gleichmäßige oberflächliche Benetzung oder Beschichtung des Düngemittels erfolgt, gleichzeitig ein Wassereintrag in das Düngemittel aber so gering bleibt, dass der strukturelle Zusammenhalt des Düngemittels nicht gefährdet oder verschlechtert wird.

Beim Aufsprühen oder Auftrommeln wässriger Lösungen auf teilchenförmige Düngemittel führt der Einsatz zu großer Flüssigkeitsmengen nämlich zum Aufweichen oder Auflösen des festen Düngemittels, so dass seine dreidimensionale Form oder der strukturelle Zusammenhalt nicht mehr gewährleistet ist oder beispielsweise Düngemittelgranulat oberflächlich erweicht oder angelöst wird und dann mit anderen Granulatkörnern zu Agglomeraten verbackt. Ist andererseits die Flüssigkeitsmenge zu gering, so ist eine gleichmäßige Verteilung auf der gesamten Oberfläche des Düngemittelgranulats nicht möglich, und kommt es lokal zu Mindergehalten an Nitrifikationsinhibitor im Düngemittelgranulat. Hierdurch entstehen "offene" Stellen im Düngemittelgranulat, an denen gegebenenfalls der mikrobielle Abbau des Ammoniumstickstoffs zu Nitrat schnell voranschreiten kann. Besonders vorteilhaft ist die möglichst gleichförmige und vollständige oberflächliche Bedeckung mit dem Nitrifikationsinhibitor.

Wasser- und Phosphorsäuremenge werden so aufeinander abgestimmt, dass sich beim Aufbringen eine gute und gleichmäßige Anhaftung oder ein gutes und gleichmäßiges Abstempeln ergeben. Durch Anpassung der unterschiedlichen Anteile an Wasser und Phosphorsäure kann die Viskosität der Mischung auf einen für die Aufbringung vorteilhaften Wert eingestellt werden.

Zu hohe Konzentrationen an 3,4-Dimethylpyrazol (DMP) oder 3,4-Dimethylpyrazolphosphat (DMPP) führen in wässrigen Formulierungen oft zu einer unzureichenden Lagerstabilität: Es kommt, insbesondere bei niedrigen Temperaturen, zu einem Auskristallisieren von DMP oder DMPP aus den wässrigen Mischungen. Damit wird die Weiterverarbeitung jedoch erschwert, da vor einem Aufsprühen der Mischung auf das Düngemittel die Feststoffe erneut in Lösung gebracht werden müssen oder zumindest so fein verteilt werden müssen, dass die Mischung homogen und sprühfähig wird. Ein Lösen des Niederschlags ist oftmals nicht oder nur mit hohem Aufwand (Verdünnung, Wärme, Bewegung, Zeit) möglich. Durch einen Niederschlag sinkt andererseits die Konzentration in der Lösung, was zu Fehldosierungen und zur Unterschreitung gesetzlicher Mindestmengen führen kann. Zu niedrige Konzentrationen führen neben dem unerwünschten Wassereintrag zu hohen Lager- und Transportkosten.

Der Nitrifikationsinhibitor soll den Ammoniumanteil des Düngemittels vor einer vorschnellen Nitrifikation schützen. Daher bemisst sich die aufzubringende Menge am Ammoniumanteil des Düngemittels, der je nach Düngemittel stark variieren kann. Für alle üblichen stickstoffhaltigen Düngemittel sollte idealerweise ein und dieselbe Mischung des Nitrifikationsinhibitors ohne vorherige Verdünnung mit Wasser oder Aufkonzentrierung einsetzbar sein. Dabei sollen bei geringen Aufbringungsmengen eine homogene Verteilung und vollständige Umhüllung des Düngemittels gewährleistet sein, bei hohen Mengen ein zu hoher Wassereintrag mit seinen nachteiligen Folgen vermieden werden, und die gesetzlich geforderte Mindestmenge sollte in einem Arbeitsgang einsetzbar sein.

Es wurde erfindungsgemäß gefunden, dass die erfindungsgemäßen wässrigen Mischungen gerade sämtliche Anforderungen sowohl hinsichtlich der Formulierbarkeit, der Lagerstabilität, als auch des Anwendungsverhaltens und der Eigenschaften beim Aufbringen auf ammoniumstickstoffhaltige Düngemittel mit unterschiedlichem Ammoniumanteil erfüllen. Nach Düngemittelverordnung kann der Stickstoffanteil Ammoniumstickstoff, Carbamidstickstoff und Cyanamidstickstoff sein.

Die gesetzliche Vorgabe besagt, dass mindestens 0,8 Gew.-% DMPP, bezogen auf den Ammoniumstickstoff im Düngemittel, aufzubringen sind. Je nach Art des Düngemittels kann der Anteil an Ammoniumstickstoff im Düngemittel jedoch in sehr breiten Bereichen variieren. Für ein ammoniumreiches Düngemittel ist die aufzubringende DMPP-Menge und damit die aufzubringende Flüssigkeitsmenge sehr hoch, was zu einem Anlösen oder Zerfallen oder Verbacken des Düngemittelgranulats führen kann.

Bei nur schwach ammoniumstickstoffhaltigen Düngemitteln kann umgekehrt die Aufbringungsmenge zu gering sein, um eine gleichmäßige oberflächliche Benetzung oder Beschichtung zu erreichen.

Andererseits ist es wenig vorteilhaft, wenn eine DMPP-Formulierung je nach Düngemitteltyp vor dem Aufbringen auf das Düngemittel verdünnt werden muss. Zum einen fällt ein weiterer fehlerträchtiger Anwendungsschritt an, bei dem die Chemikalie gehandhabt werden muss, zum andern muss eine gute Vermischung erreicht werden, um keine Konzentrationsunterschiede in der Mischung zu erhalten. Die Wassermenge darf dabei weder zu hoch werden noch zu niedrig, um eine fehlerfreie Aufbringung sicherzustellen.

Es wurde erfindungsgemäß gefunden, dass DMP gerade in Verbindung mit Phosphorsäure, das heißt als Umsetzungsprodukt DMPP vorliegend, in einer Konzentration in einem wässrigen System formuliert werden kann, die zur Beschichtung der meisten üblichen ammoniumstickstoffhaltigen Düngemittel direkt anwendbar ist, ohne dass weitere Konzentrierungs- oder Verdünnungsschritte notwendig sind. Dies wird durch eine spezifische Konzentration an DMPP und Wasser möglich, wobei neben Phosphorsäure und gegebenenfalls Farbstoff vorzugsweise keine nennenswerten Mengen anderer Inhaltsstoffe vorliegen. Hierdurch ergibt sich auch der optimale Anteil an Phosphorsäure in der Mischung.

Es wurde ferner erfindungsgemäß gefunden, dass eine wässrige Mischung eingesetzt werden kann, so dass keine organischen Lösungsmittel gehandhabt und beim Trocknen entfernt werden müssen. Damit wird die Handhabung der DMPP enthaltenden Mischung deutlich vereinfacht.

Zudem wurde erfindungsgemäß gefunden, dass die zugesetzte Phosphorsäure das in der Mischung enthaltene Wasser teilweise ersetzen kann und die Einstellung der Viskosität der Mischung in gewünschter Weise erlaubt, sodass die Mischung sprühfähig bleibt, die Tröpfchen jedoch auf dem Düngemittelgranulat anhaften und beispielsweise beim Auftrommeln zu einer gleichmäßigen Oberflächenbelegung führen.

Die erfindungsgemäßen Mischungen haben die ideale Viskosität für die Beschichtung von Düngemitteln. Sie sind honig- oder rapsölartig in der Viskosität und ziehen daher nach dem Aufbringen nicht zu schnell in das Düngemittelgranulat ein. Hierdurch ist eine gleichmäßige Beschichtung möglich, da bei einer mechanischen Bewegung des Düngemittelgranulats die Mischung gleichmäßig auf die gesamte Oberfläche verteilt wird - und dies für Düngemittel mit unterschiedlichem Ammoniumanteil.

Es wurde zudem erfindungsgemäß gefunden, dass das Aufbringen der Mischung (das Abstempeln der Mischung) durch die Mitverwendung von Phosphorsäure beziehungsweise die Verwendung von DMPP anstelle DMP und den spezifischen Wassergehalt nochmals verbessert wird.

Durch den Zusatz eines Farbstoffs zur Mischung ist eine optische Kontrolle der gleichmäßigen Aufbringung auf das Düngemittel möglich: Eine ungleichmäßige Beschichtung des Düngemittels ist optisch in einfacher Weise zu erkennen.

Die erfindungsgemäße Mischung enthält 20 bis 35,0 Gew.-%, vorzugsweise 22,0 bis 32,0 Gew.-%, insbesondere 25,0 bis 30,0 Gew.-% Wasser, 15 bis 19 Gew.-%, vorzugsweise 16,0 bis 18,0 Gew.-%, insbesondere 17,0 bis 17,8 Gew.-% 3,4-Dimethylpyrazol. Dies bedeutet nicht, dass in der fertigen Mischung 3,4-Dimethylpyrazol in der Basenform vorliegen muss, sondern besagt nur die Einsatzmenge, bezogen auf die Verbindung 3,4-Dimethylpyrazol (Molekulargewicht 96,13 g/mol). Der Rest der Mischung (auf 100 Gew.-%) kann Phosphorsäure oder ein Gemisch aus Phosphorsäure und weiteren Inhaltsstoffen sein.

Phosphorsäure wird in einem Molverhältnis zu 3,4-Dimethylpyrazol im Bereich von mindestens 2: 1, insbesondere mindestens 3 : 1 mitverwendet. Geeignete Bereiche für das Molverhältnis sind vorzugsweise 1 : 1 bis 4,25 : 1, besonders bevorzugt 2 : 1 bis 4 : 1, stärker bevorzugt 2,5 : 1 bis 3,75 : 1, insbesondere 3 : 1 bis 3,5 : 1. Damit entsteht aus

Phosphorsäure und 3,4-Dimethylpyrazol das Phosphorsäure-Additionssalz DMPP. Die in der Beschreibung und den Ansprüchen beschriebenen Mischungen enthalten daher aufgrund der Anwesenheit von 3,4-Dimethylpyrazol und Phosphorsäure zumindest weit überwiegend das entsprechende Säure-Additionssalz DMPP sowie zusätzliche Phosphorsäure.

Vorzugsweise liegt sämtliches 3,4-Dimethylpyrazol in den erfindungsgemäßen Mischungen in Form des Säure-Additionssalzes mit Phosphorsäure vor. Dies bedeutet, dass vorzugsweise 3,4-Dimethylpyrazol und Phosphorsäure zumindest äquimolar eingesetzt werden. Um sämtliches 3,4-Dimethylpyrazol umzusetzen, ist die Verwendung eines geringfügigen Überschusses an Phosphorsäure vorteilhaft zur Einstellung des vorteilhaften Eigenschaftsprofils bezüglich Volumen, Viskosität, Sprühfähigkeit, Kristallisationsverhalten, Abstempelverhalten, Lagerfähigkeit. Neben dem Wasseranteil und DMPP-Anteil hat hierauf auch der Phosphorsäureüberschuss einen Anteil. Er hilft z. B., die Viskosität der Lösung auf einen geeigneten Wert einzustellen.

Die erfindungsgemäßen Mischungen können neben 3,4-Dimethylpyrazol und Phosphorsäure lediglich Wasser als dritte Komponente enthalten, ohne weitere Zusatzstoffe. Die Gesamtmenge dieser drei Komponenten kann damit 100 Gew.-% ergeben.

Sofern weitere Zusatzstoffe mitverwendet werden, sollte ihre Menge vorzugsweise nicht größer als 10 Gew.-%, besonders bevorzugt nicht größer als 5 Gew.-%, insbesondere nicht größer als 3 Gew.-% sein. Die Untergrenze für die weiteren Zusatzstoffe ist nicht beschränkt und kann beispielsweise 0 Gew.-%, 0,1 Gew.-% oder 0,2 Gew.-% betragen. Die Gesamtmenge der Inhaltsstoffe der Mischung kann damit in diesem Fall 100 Gew.-% ergeben.

Gemäß einer Ausführungsform der Erfindung werden keine Aminosäuren mitverwendet.

Wie vorstehend angegeben, ist die Mitverwendung eines Farbstoffs vorteilhaft. Bevorzugt enthalten die erfindungsgemäßen Mischungen 0,1 bis 2 Gew.-%, besonders bevorzugt 0,3 bis 1,5 Gew.-%, insbesondere 0,5 bis 1,3 Gew.-% mindestens eines Farbstoffs. Dann können noch 0 bis 5 Gew.-%, vorzugsweise 0 bis 3 Gew.-%, insbesondere 0 bis 2 Gew.-% weitere Zusatzstoffe vorliegen. Die Gesamtmenge der Inhaltsstoffe der erfindungsgemäßen Mischungen ergibt 100 Gew.-%.

Der Farbstoff liegt beispielsweise, bezogen auf DMP, in einer Menge von 1 bis 10 Gew.-%, vorzugsweise 3 bis 7 Gew.-%, insbesondere etwa 5 Gew.-% vor. In diesem Fall kann die Summe aus 3,4-Dimethylpyrazol, Wasser und Phosphorsäure 100 Gew.-% ergeben.

Weitere Zusatzstoffe können Stoffe sein, die die Benetzbarkeit des Düngemittels verbessern, die eine Dispergierbarkeit von gegebenenfalls gebildeten Feststoffteilchen in der Mischung vereinfachen oder die ein Ausfrieren einzelner Bestandteile oder der gesamten Mischung bei niedrigen Umgebungstemperaturen erschweren. Hier kommen beispielsweise ein- oder mehrwertige Alkohole wie Ethanol oder Glykol in Betracht. Vorzugsweise wird jedoch ohne organische Lösungs- und Verdünnungsmittel gearbeitet.

Eine bevorzugte Mischung besteht aus Wasser, 3,4-Dimethylpyrazol, Phosphorsäure und 0 bis 10 Gew.-% weiteren Zusatzstoffen, bezogen auf die gesamte Mischung, die 100 Gew.-% ergibt. Eine weitere bevorzugte Mischung besteht aus 25,0 bis 30,0 Gew.-% Wasser, 17,0 bis 17,8 Gew.-% 3,4-Dimethylpyrazol, Phosphorsäure sowie 0,1 bis 2 Gew.-% Farbstoff und 0 bis 5 Gew.-% weiteren Zusatzstoffen, bezogen auf die gesamte Mischung, die 100 Gew.-% ergibt.

Die erfindungsgemäßen Mischungen können auf beliebige geeignete Weise hergestellt werden, beispielsweise durch Einbringen von 3,4-Dimethylpyrazol und Phosphorsäure und weiteren Inhaltsstoffen in Wasser und Vermischen. Es kann auch direkt DMPP, gegebenenfalls zusammen mit zusätzlicher Phosphorsäure in Wasser eingemischt werden. Die Reihenfolge der Zugabe und Vermischung ist dabei beliebig wählbar. Vorzugsweise wird DMP vorgelegt, die notwendige oder gewünschte Menge an Phosphorsäure zugesetzt und anschließend, falls erforderlich, mit Wasser verdünnt. DMP und Phosphorsäure können in Wasser gelöst bzw. mit Wasser vermischt eingesetzt werden.

Die erfindungsgemäßen Mischungen liegen bei Umgebungstemperatur (23 °C) in der Regel als Lösung ohne Feststoffanteil vor. Typischerweise ist die Lösung bei Umgebungstemperatur (23 °C) für einen Zeitraum von mehreren Wochen lagerfähig, ohne dass es zum Auskristallisieren oder Ausfällen einzelner Bestandteile kommt.

Die erfindungsgemäße Mischung wird zum Behandeln oder Beschichten von ammoniumstickstoffhaltigen Düngemitteln verwendet. Dabei kann es sich um flüssige oder feste ammoniumstickstoffhaltige Düngemittel handeln beziehungsweise flüssige oder feste ammoniumstickstoffhaltige Düngemittelformulierungen.

Vorzugsweise wird dabei die Mischung in einer solchen Menge eingesetzt, dass, bezogen auf den Ammoniumstickstoffgehalt des Düngemittels, mindestens 0,4 Gew.-% 3,4-Dimethylpyrazol vorliegen. Auf DMPP bezogen ist die Mindestmenge etwa doppelt so groß, da Phosphorsäure mit einem Molekulargewicht von 98 g/mol in etwa dasselbe Molekulargewicht aufweist wie DMP.

Besonders bevorzugte Einsatzmengen führen zu einem Gehalt an 0,4 bis 1,4 Gew.-%, vorzugsweise 0,4 bis 0,8 Gew.-%, an 3,4-Dimethylpyrazol, bezogen auf den Ammoniumstickstoff im Düngemittel.

Vorzugsweise beträgt der Anteil an Ammoniumstickstoff im Düngemittel mindestens 20 Gew.-%.

Gemäß einer Ausführungsform der Erfindung liegt das zu behandelnde Düngemittel in fester Form vor. Beispielsweise liegt es in Form von Pulver, Granulat, Split, Tabletten oder Strängen vor. Besonders bevorzugt liegt es als Granulat vor. Auch andere geeignete Festkörperformen sind erfindungsgemäß möglich.

Zur Aufbringung ist eine Erwärmung des Düngemittels nicht notwendig, sondern sie kann bei Umgebungstemperatur (z. B. 10 bis 30 °C), jedenfalls unterhalb von 50 °C erfolgen.

Alternativ kann die erfindungsgemäße Mischung auch zur Stabilisierung von Gülle oder flüssigen Düngemittelformulierungen eingesetzt werden. Auch in diesem Fall wird der Ammoniumstickstoff vor einer zu schnellen Nitrifikation geschützt.

Zur Herstellung von stabilisierten ammoniumstickstoffhaltigen Düngemitteln wird die erfindungsgemäße Mischung auf das Düngemittel aufgebracht oder in das Düngemittel eingebracht.

Beispielsweise bringt man die erfindungsgemäße Mischung auf ammoniumstickstoffhaltiges Düngemittel in Pulver-, Granulat-, Split-, Tabletten- oder Strang-Form auf und verteilt es gleichmäßig auf der Düngemitteloberfläche.

Die gleichmäßige Verteilung bedeutet, dass mindestens 75 %, vorzugsweise mindestens 85 %, besonders bevorzugt mindestens 90 % der Oberfläche, insbesondere die gesamte Oberfläche des Düngemittels mit der erfindungsgemäßen Mischung benetzt oder behandelt sind. Bei Mitverwendung eines Farbstoffs kann man dies anhand der Einfärbung des Düngemittels überprüfen. Das so behandelte Düngemittel ist gegen die vorschnelle Nitrifikation stabilisiert. In diesem Sinne wird erfindungsgemäß der Begriff "stabilisiertes ammoniumstickstoffhaltiges Düngemittel" verwendet.

Das Aufbringen der erfindungsgemäßen Mischung auf das feste Düngemittel kann in beliebiger geeigneter Weise erfolgen, beispielsweise durch Aufsprühen, Auftrommeln oder Imprägnieren. Dabei wird das Düngemittel zur Vergleichmäßigung des Aufbringens mechanisch bewegt, beispielsweise mithilfe von Rührern oder durch Bewegung des Düngemittels, beispielsweise in einer Trommel. Nach dem Aufbringen der erfindungsgemäßen Mischung wird das Düngemittel getrocknet, um die mit der Mischung eingebrachte Feuchte zu entfernen. Die Trocknung erfolgt dabei vorzugsweise bis zu einem solchen Trockenheitsgrad, der ein Verbacken oder Auflösen des Düngemittels zuverlässig verhindert. In der Praxis ist es vorteilhaft, das beschichtete Düngemittel für mehrere Tage abzulagern. Im Unterschied zu der DE-C-101 64 103 ist beim Aufbringen kein Erwärmen des Düngemittels notwendig.

Die Herstellung von 3,4-Dimethylpyrazol beziehungsweise 3,4-Dimethylpyrazolphosphat kann in beliebiger geeigneter Weise erfolgen. Beispielsweise ist die Herstellung in EP-B-0 917 526 oder EP-B-1 120 388 beschrieben. Für weitere geeignete Herstellungsverfahren kann auch auf EP-B-0 974 585 und EP-B-2 748 148 verwiesen werden. Die Herstellung kann auch analog zu EP-A-0 529 473 oder EP-B-0 516 982 erfolgen.

Die Erfindung wird durch die nachstehenden Beispiele näher erläutert.

### Beispiele

### Beispiel 1: Erstellung der Mischung

In Wasser werden 3,4-Dimethylpyrazol und Phosphorsäure sowie ein Farbstoff in einer Menge von 5 Gew.-% bezüglich 3,4-Dimethylpyrazol eingetragen und durch Rühren vermischt. Die Mischung enthält 17,4 Gew.-% DMP, 27,3 Gew.-% Wasser und als Rest (55,3 Gew-%) Phosphorsäure einer überäquimolaren Menge (Überschuss). Zu dieser Mischung wird der Farbstoff in der angegebenen Menge zugesetzt.

### Beispiel 2: Beschichtung von Düngemitteln

Pro Tonne unterschiedlich ammoniumstickstoffhaltigem Düngemittel werden die nachfolgenden Mengen an DMPP-Formulierung aus Beispiel 1 mit einem DMPP-Gehalt von 34,8 Gew-%, gegebenenfalls darüber hinaus weiterer zusätzlicher Phosphorsäure und Farbe eingesetzt:

| kg DMPP 34,8% | kg H3PO4 | kg Farbe | kg total |
|---|---|---|---|
| 5,26 | 0,00 | 0,06 | 5,32 |
| 5,67 | 0,00 | 0,06 | 5,73 |
| 2,97 | 1,76 | 0,07 | 4,80 |

Es ergab sich jeweils ein Düngemittel mit einem Gehalt von 0,80 Gew.-% DMPP, bezogen auf Ammoniumstickstoff.

Aufgrund des unterschiedlichen Ammoniumstickstoffgehalts der einzelnen Düngemittel beträgt der Anteil an DMPP pro Tonne Düngemittel in den obigen Beispielen von oben nach unten 0,148 Gew.-% beziehungsweise 0,168 Gew.-% beziehungsweise 0,088 Gew.-%. Es ergab sich jeweils ein gleichmäßiger Auftrag des DMPP auf die gesamte Düngemitteloberfläche.

Durch die Zugabe von Phosphorsäure beim dritten, wenig Stickstoff enthaltenden Düngemittel wurde eine für den gleichmäßigen Auftrag geeignete Gesamtmenge erhalten, ohne durch Wasserzusatz ein Anlösen des Düngemittels zu riskieren.

### Beispiel 3

Die nachstehend angegebenen Auftragmengen der Mischung aus Bsp. 1, berechnet auf Basis von DMP, wurden auf unterschiedliche Düngemittel aufgetragen:

| Düngemittel | kg/t DMP |
|---|---|
| Urea | 1,8-9,5 |
| 15+15+15 S | 0,4-3,0 |
| AS | 1,0-6,7 |

In allen Fällen erfolgte ein gleichmäßiger Auftrag des DMPP auf das Düngemittel. Es kam zu keiner Anlösung und auch zu keinem Verbacken des Düngemittels bei der Beschichtung, der nachfolgenden Trocknung oder der Lagerung.

### Vergleichsbeispiel 4

Eine Erhöhung der DMP-Konzentration in der Lösung auf 20 Gew.-% führte zum Ausfällen des DMPP nach mehreren Tagen. Beim Auftrag auf Düngemittel mit niedrigem Ammoniumgehalt ergaben sich Fehlstellen (ungleichmäßiger Auftrag).

Eine Verminderung der DMP-Konzentration auf 13 Gew.-% führte insbesondere beim Auftrag auf Düngemittel mit hohem Ammoniumgehalt zu einem oberflächlichen Anlösen des Granulats.

## Patentansprüche

1. Mischung, enthaltend 22,0 bis 32,0 Gew.-% Wasser und 15 bis 19 Gew.-% 3,4-Dimethylpyrazol, bezogen auf die gesamte Mischung, die 100 Gew.-% ergibt, und Phosphorsäure in einem Molverhältnis zu 3,4-Dimethylpyrazol von mindestens 2 : 1.

2. Mischung nach Anspruch 1, **dadurch gekennzeichnet, dass** sie 16,0 bis 18,0 Gew.-%, vorzugsweise 17,0 bis 17,8 Gew.-%, bezogen auf die gesamte Mischung, die 100 Gew.-% ergibt, an 3,4-Dimethylpyrazol enthält.

3. Mischung nach Anspruch 1 oder 2, **dadurch gekennzeichnet, dass** sie Wasser in einer Menge von 25,0 bis 30,0 Gew.-%, enthält, bezogen auf die gesamte Mischung, die 100 Gew.-% ergibt.

4. Mischung nach einem der Ansprüche 1 bis 3, **dadurch gekennzeichnet, dass** sie aus Wasser, 3,4-Dimethylpyrazol, Phosphorsäure und 0 bis 10 Gew.-% weiteren Zusatzstoffen, bezogen auf die gesamte Mischung, die 100 Gew.-% ergibt, besteht.

5. Mischung nach Anspruch 4, **dadurch gekennzeichnet, dass** sie aus 25,0 bis 30,0 Gew.-% Wasser, 17,0 bis 17,8 Gew.-% 3,4-Dimethylpyrazol, Phosphorsäure sowie 0,1 bis 2 Gew.-% Farbstoff und 0 bis 5 Gew.-% weiteren Zusatzstoffen besteht, bezogen auf die gesamte Mischung, die 100 Gew.-% ergibt.

6. Verfahren zur Herstellung einer Mischung nach einem der Ansprüche 1 bis 5 durch Einbringen von 3,4-Dimethylpyrazol, Phosphorsäure und gegebenenfalls weiteren Zusatzstoffen in Wasser und Vermischen der in Wasser eingebrachten Stoffe.

7. Verwendung einer Mischung nach einem der Ansprüche 1 bis 5 zum Behandeln oder Beschichten von ammoniumstickstoffhaltigen Düngemitteln.

8. Verwendung nach Anspruch 7, **dadurch gekennzeichnet, dass** man die Mischung in einer solchen Menge einsetzt, dass, bezogen auf den Ammoniumstickstoffgehalt des Düngemittels, mindestens 0,4 Gew.-% 3,4-Dimethylpyrazol vorliegen.

9. Verwendung nach Anspruch 7 oder 8, **dadurch gekennzeichnet, dass** das zu behandelnde Düngemittel in Form von Pulver, Granulat, Split, Tabletten oder Strängen vorliegt.

10. Verwendung einer Mischung nach einem der Ansprüche 1 bis 5 zur Stabilisierung von Gülle oder flüssigen Düngemittelformulierungen.

11. Verfahren zur Herstellung von stabilisierten ammoniumstickstoffhaltigen Düngemittelpulvern, -granulaten, -split, -tabletten oder -strängen, **dadurch gekennzeichnet, dass** man eine Mischung nach einem der Ansprüche 1 bis 5 auf ammoniumstickstoffhaltige Düngemittelpulver, -granulate, -split, -tabletten oder -stränge aufbringt und auf der Düngemitteloberfläche gleichmäßig verteilt.

12. Verfahren nach Anspruch 11, **dadurch gekennzeichnet, dass** das Aufbringen durch Aufsprühen, Auftrommeln oder Imprägnieren erfolgt, wobei das Düngemittel zur Vergleichmäßigung des Aufbringens mechanisch bewegt wird und nach dem Aufbringen getrocknet wird.

13. Verfahren nach Anspruch 11 oder 12, **dadurch gekennzeichnet, dass** die Mischung in einer solchen Menge auf das Düngemittel aufgebracht wird, dass die Menge an 3,4-Dimethylpyrazol, bezogen auf den Ammoniumstickstoff im Düngemittel, mindestens 0,4 Gew.-% beträgt.

14. Verfahren nach Anspruch 13, **dadurch gekennzeichnet, dass** die Mischung in einer solchen Menge auf das Düngemittel aufgebracht wird, dass die Menge an 3,4-Dimethylpyrazol, bezogen auf den Ammoniumstickstoff im Düngemittel, 0,4 bis 1,4 Gew.-%, vorzugsweise 0,4 bis 0,8 Gew.-% beträgt.

## Claims

1. A mixture comprising 22.0 to 32.0 wt.% of water and 15 to 19 wt.% of 3,4-dimethylpyrazole, based on the total mixture that adds up to 100 wt.%, and phosphoric acid in a molar ratio to 3,4-dimethylpyrazole of at least 2:1.

2. The mixture according to claim 1, **characterized in that** it contains 16.0 to 18.0 wt.%, preferably 17.0 to 17.8 wt.%, based on the total mixture that adds up to 100 wt.%, of 3,4-dimethylpyrazole.

3. The mixture according to claim 1 or 2, **characterized in that** it contains water in an amount of 25.0 to 30.0 wt.%, based on the total mixture that adds up to 100 wt.%.

4. The mixture according to any of claims 1 to 3, **characterized in that** it consists of water, 3,4-dimethylpyrazole, phosphoric acid and 0 to 10 wt.% of further additives, based on the total mixture that adds up to 100 wt.%.

5. The mixture according to claim 4, **characterized in that** it consists of 25.0 to 30.0 wt.% of water, 17.0 to 17.8 wt.% of 3,4-dimethylpyrazole, phosphoric acid as well as 0.1 to 2 wt.% of dye and 0 to 5 wt.% of further additives, based on the total mixture that adds up to 100 wt.%.

6. A process for producing a mixture according to any of claims 1 to 5 by introducing of 3,4-dimethylpyrazole, phosphoric acid and optionally further additives into water and mixing of the substances introduced into water.

7. The use of a mixture according to any of claims 1 to 5 for treating or coating ammonium nitrogen-containing fertilizers.

8. The use according to claim 7, **characterized in that** the mixture is used in such an amount that, based on the ammonium nitrogen content of the fertilizer, at least 0.4 wt.% of 3,4-dimethylpyrazole is present.

9. The use according to claim 7 or 8, **characterized in that** the fertilizer to be treated is present in the form of powder, granules, chips, tablets or extrudates.

10. The use of a mixture according to any of claims 1 to 5 for stabilization of liquid manure or liquid fertilizer formulations.

11. A process for the production of stabilized ammonium nitrogen-containing fertilizer powders, granules, chips, tablets or extrudates, **characterized in that** a mixture according to any of claims 1 to 5 is applied to ammonium nitrogen-containing fertilizer powder, granules, chips, tablets or extrudates and distributed uniformly over the fertilizer surface.

12. The process according to claim 11, **characterized in that** the applying is effected by spray application, drum application or impregnation, wherein the fertilizer is moved mechanically to homogenize the application and is dried after the application.

13. The process according to claim 11 or 12, **characterized in that** the mixture is applied to the fertilizer in such an amount that the amount of 3,4-dimethylpyrazole, based on the ammonium nitrogen in the fertilizer, is at least 0.4 wt.%.

14. The process according to claim 13, **characterized in that** the mixture is applied to the fertilizer in such an amount that the amount of 3,4-dimethylpyrazole, based on the ammonium nitrogen in the fertilizer, is 0.4 to 1.4 wt.%, preferably 0.4 to 0.8 wt.%.

## Revendications

1. Mélange, contenant 22,0 à 32,0 % en poids d'eau et 15 à 19 % en poids de 3,4-diméthylpyrazole, par rapport au mélange total, qui donne 100 % en poids, et de l'acide phosphorique en un rapport molaire par rapport au 3, 4-diméthylpyrazole d'au moins 2 : 1.

2. Mélange selon la revendication 1, **caractérisé en ce qu'**il contient 16,0 à 18,0 % en poids, de préférence 17,0 à 17,8 % en poids, par rapport au mélange total, qui donne 100 % en poids, de 3,4-diméthylpyrazole.

3. Mélange selon la revendication 1 ou 2, **caractérisé en ce qu'**il contient de l'eau en une quantité de 25,0 à 30,0 % en poids, par rapport au mélange total, qui donne 100 % en poids.

4. Mélange selon l'une quelconque des revendications 1 à 3, **caractérisé en ce qu'**il est constitué d'eau, de 3,4-diméthylpyrazole, d'acide phosphorique et de 0 à 10 % en poids d'additifs supplémentaires, par rapport au mélange total, qui donne 100 % en poids.

5. Mélange selon la revendication 4, **caractérisé en ce qu'**il est constitué de 25,0 à 30,0 % en poids d'eau, de 17,0 à 17,8 % en poids de 3,4-diméthylpyrazole, d'acide phosphorique ainsi que de 0,1 à 2 % en poids de colorant et de 0 à 5 % en poids d'additifs supplémentaires, par rapport au mélange total, qui donne 100 % en poids.

6. Procédé pour la préparation d'un mélange selon l'une quelconque des revendications 1 à 5 par introduction de 3,4-diméthylpyrazole, d'acide phosphorique et éventuellement d'additifs supplémentaires dans de l'eau et mélange des matières introduites dans l'eau.

7. Utilisation d'un mélange selon l'une quelconque des revendications 1 à 5 pour le traitement ou le revêtement d'engrais contenant de l'azote d'ammonium.

8. Utilisation selon la revendication 7, **caractérisée en ce qu'**on utilise le mélange en une telle quantité que, par rapport à la teneur en azote d'ammonium de l'engrais, au moins 0,4 % en poids de 3,4-diméthylpyrazole soit présent.

9. Utilisation selon la revendication 7 ou 8, **caractérisée en ce que** l'engrais devant être traité est présent sous forme de poudre, de granulats, de gravillons, de comprimés ou de brins.

10. Utilisation d'un mélange selon l'une quelconque des revendications 1 à 5 pour la stabilisation de lisier ou de formulations liquides d'engrais.

11. Procédé pour la préparation de poudres, de granulats, de gravillons, de comprimés ou de brins d'engrais contenant de l'azote d'ammonium stabilisé, **caractérisé en ce qu'**on applique un mélange selon l'une quelconque des revendications 1 à 5 sur les poudres, les granulats, les gravillons, les comprimés ou les brins d'engrais contenant de l'azote d'ammonium et on le répand uniformément sur la surface de l'engrais.

12. Procédé selon la revendication 11, **caractérisé en ce que** l'application est réalisée par pulvérisation, par tonnelage ou par imprégnation, l'engrais étant déplacé mécaniquement pour l'uniformisation de l'application et étant séché après l'application.

13. Procédé selon la revendication 11 ou 12, **caractérisé en ce que** le mélange est appliqué en une telle quantité sur l'engrais pour que la quantité de 3,4-diméthylpyrazole, par rapport à l'azote d'ammonium dans l'engrais, soit d'au moins 0,4 % en poids.

14. Procédé selon la revendication 13, **caractérisé en ce que** le mélange est appliqué en une telle quantité sur l'engrais pour que la quantité de 3,4-diméthylpyrazole, par rapport à l'azote d'ammonium dans l'engrais, soit de 0,4 à 1,4 % en poids, de préférence 0,4 à 0,8 % en poids.
